# EUROPEAN PATENT APPLICATION

(11) **EP 4 068 580 A2**
(43) Date of publication of application: **05.10.2022**
(21) Application number: 22165321.5
(22) Date of filing: 30.03.2022
(51) Int. Cl.: H02K 5/10, H02K 5/124, H02K 5/167, H02K 11/40, B60K 1/00

(54) **MOTOR, POWERTRAIN AND ELECTRIC VEHICLE**

(30) Priority: 31.03.2021 CN 202110350795
(71) Applicant: Huawei Digital Power Technologies Co., Ltd., Shenzhen, 518043 (CN)
(72) Inventor: YU, Guoquan, Shenzhen, 518129 (CN); CHEN, Zhenxing, Shenzhen, 518129 (CN); MA, Wenwu, Shenzhen (CN); CAO, Chao, Shenzhen, 518129 (CN)
(74) Representative: Pfenning, Meinig & Partner mbB

(57) **Abstract**

This application provides a motor, including a housing, a shaft bearing, a motor shaft, a first sealing member, a conductive post, a conductive bearing, a second sealing member, and a conductive connecting member. The motor shaft is rotatably installed on the housing through the shaft bearing. A part of the motor shaft is located inside the housing, and the motor shaft has a cavity. The first sealing member, the conductive bearing, the second sealing member, the conductive post, and the conductive connecting member are all located inside the housing. The first sealing member, the conductive bearing, and the second sealing member are located inside the cavity. The conductive bearing is located between the first sealing member and the second sealing member, and the first sealing member and the second sealing member seal the conductive bearing in the cavity. An outer ring of the conductive bearing is fixedly connected to a cavity wall of the cavity, and an inner ring of the conductive bearing is fixedly connected to an outer circumferential surface of the conductive post. The conductive connecting member is connected to one end, facing away from the first sealing member, of the conductive post and is electrically connected to the housing. According to the solutions of this application, the shaft bearing can be prevented from electric corrosion, and reliability of the shaft bearing can be ensured.

## Description

### TECHNICAL FIELD

This application relates to the field of electric vehicle technologies, and in particular, to a motor, a powertrain, and an electric vehicle.

### BACKGROUND

During operation of a drive motor of an electric vehicle, a shaft voltage is formed on a motor shaft. If the shaft voltage exceeds a breakdown threshold of lubricating grease in a shaft bearing, partial discharge occurs between a rolling element and a rolling path of the shaft bearing, leading to formation of an electric melting pit on the rolling path and occurrence of electric corrosion of the bearing. The electrical erosion of the bearing aggravates a damage to the shaft bearing, leading to specific order noise and high-frequency noise of the shaft bearing, which affects ride comfort of the entire vehicle, and even a failure of the shaft bearing and interruption of power.

### SUMMARY

This application provides a motor, a powertrain, and an electric vehicle, to prevent a bearing from electric corrosion and ensure reliability of the shaft bearing.

According to a first aspect, this application provides a motor, including a housing, a shaft bearing, a motor shaft, a first sealing member, a conductive post, a conductive bearing, a second sealing member, and a conductive connecting member. The shaft bearing is fixed to the housing. The motor shaft is rotatably installed on the housing through the shaft bearing. A part of the motor shaft is located inside the housing, and the motor shaft has a cavity. The first sealing member, the conductive bearing, the second sealing member, the conductive post, and the conductive connecting member are all located inside the housing. The first sealing member is located inside the cavity, and an outer circumferential surface of the first sealing member is fixedly connected to a cavity wall of the cavity. At least a part of the conductive post is located inside the cavity, and the conductive post is located on a side of the first sealing member. The second sealing member is located inside the cavity, and the second sealing member is sleeved on an outer circumference surface of the conductive post. An inner side of the second sealing member is in slidable contact with the outer circumferential surface of the conductive post, and an outer circumferential surface of the second sealing member is fixedly connected to the cavity wall of the cavity. The second sealing member, the first sealing member, and the cavity wall of the cavity enclose a sealed space. The conductive bearing is located inside the sealed space, an outer ring of the conductive bearing is fixedly connected to the cavity wall of the cavity, and an inner ring of the conductive bearing is fixedly connected to the outer circumferential surface of the conductive post. The conductive connecting member is connected to one end, facing away from the first sealing member, of the conductive post and is electrically connected to the housing.

The motor in this application may be an oil-cooled motor, that is, cooling oil is used for cooling and heat dissipation. The cooling oil can flow in the housing and in the cavity to achieve cooling and heat dissipation. The housing may have an internal space, and the housing may be grounded (for example, earthed). The shaft bearing is configured to implement rotation of the motor shaft relative to the housing. An interference fit may be formed between the outer circumferential surface of the first sealing member and the cavity wall of the cavity, so that the first sealing member rotates with rotation of the motor shaft. An interference fit may be formed between the outer circumferential surface of the second sealing member and the cavity wall of the cavity, so that the second sealing member rotates with rotation of the motor shaft. When the second sealing member rotates, the inner side of the second sealing member is slidable on the outer circumferential surface of the conductive post. The inner and outer rings of the conductive bearing can respectively form interference fits with the outer circumferential surface of the conductive post and the cavity wall of the cavity, and the conductive bearing is used to electrically connect the motor shaft and the conductive post. The conductive post may be stationary relative to the housing. The conductive connecting member is configured to electrically connect the conductive post and the housing.

In this way, when a shaft voltage is generated during rotation of the motor shaft, a shaft current can be conducted along the following path: motor shaft -> conductive bearing -> conductive post -> conductive connecting member -> housing -> ground. Therefore, in the solutions of this application, the shaft voltage on the motor shaft can be released to the ground, preventing the shaft bearing from electric corrosion. Furthermore, the conductive bearing can be sealed by using the first sealing member and the second sealing member, to ensure that the conductive bearing operates in an oil-free environment and that the conductive bearing can be conductive reliably.

In an implementation, the first sealing member includes a base plate and a rim, the rim surrounds an outer circumference surface of the base plate, and an outer circumferential surface of the rim is fixedly connected to the cavity wall of the cavity. The rim and the base plate enclose an opening, the opening faces the conductive post, and both the base plate and the rim are spaced from the conductive post. Such a first sealing member may be an oil plug, and has a simple structure and high sealing performance. The base plate and the rim are spaced from the conductive post, so that during rotation, the first sealing member does not rub against the conductive post.

In an implementation, the second sealing member includes a fitting portion and a sealing lip. The sealing lip is connected to the fitting portion, the fitting portion faces the cavity wall of the cavity, and the sealing lip faces the outer circumferential surface of the conductive post. The fitting portion is annular, and a surface, facing away from the sealing lip, of the fitting portion is the outer circumferential surface of the second sealing member. The sealing lip includes two intersecting surfaces, and a side at which the two surfaces intersect is an inner side of the second sealing member. Such a second sealing member may be a skeleton oil seal, and has a mature structure and high sealing performance, and is easy for mass production.

In an implementation, the motor includes a bracket located inside the housing, and the bracket is fixedly connected to the housing. The bracket is connected to one end, facing away from the first sealing member, of the conductive post. The conductive connecting member connects the conductive post and the bracket, to electrically connect to the housing through the bracket. The bracket can be used to suspend and support the conductive post, thereby ensuring that the conductive post can be installed reliably in the cavity.

In an implementation, the bracket includes an outer circumferential portion, a connecting portion, and an inner circumferential portion, and the connecting portion connects the outer circumferential portion and the inner circumferential portion. The outer circumferential portion is fixedly connected to the housing. The inner periphery portion has a fitting hole, and one end, facing away from the first sealing member, of the conductive post passes through the fitting hole. In such a structure, the bracket has a reliable structure, can occupy small space, can be used to support another component, and has good reusability.

In an implementation, the outer circumferential portion is in an arc-shaped plate shape, at least two connecting portions are provided, and the at least two connecting portions are distributed in a radiative divergence shape. In such a structure, the bracket has a reliable structure, can occupy small space, can be used to support another component, and has good reusability.

In an implementation, an outer circumferential surface of one end, facing away from the first sealing member, of the conductive post includes two planes, and the two planes are disposed opposite to each other. The fitting hole is adapted to the outer circumferential surface of the end, facing away from the first sealing member, of the conductive post. In such a structure, the bracket can limit the conductive post, so that the conductive post does not have significant movement in a circumferential direction of the cavity.

In an implementation, the conductive connecting member includes a first contact portion, a middle portion, and a second contact portion. The middle portion connects the first contact portion and the second contact portion, the first contact portion is connected to the middle portion in a bent manner, and the middle portion is connected to the second contact portion in a bent manner. The first contact portion is connected to an end part of the end, facing away from the first sealing member, of the conductive post, and the second contact portion is connected to the bracket. Such a conductive connecting member has a reliable structure and reliable conduction, and assembly precision can be easily ensured.

In an implementation, the end, facing the first sealing member, of the conductive post is a hollow cylindrical structure. The inner ring of the conductive bearing is in interference fit with the outer circumferential surface of the hollow cylindrical structure. The end of the conductive post is a hollow cylindrical structure, which can reduce structural strength of the end, to achieve easy interference fit between the end and the conductive bearing.

In an implementation, the end, facing away from the first sealing member, of the conductive post has a connection hole. The motor includes a connecting member, and the connecting member fits the connection hole and fixes the conductive connecting member to the conductive post. The end of the conductive post has a connection hole, and such a design can easily and reliably achieve assembly of the conductive connecting member and the conductive post.

According to a second aspect, this application provides a powertrain, including a motor controller and a motor. The motor controller is electrically connected to the motor to control operation of the motor. Because the shaft bearing can be prevented from electric corrosion, reliability of the shaft bearing is relatively high, and reliability of the entire powertrain is ensured.

According to a third aspect, this application provides an electric vehicle, including a vehicle frame and a powertrain, and the powertrain is installed on the vehicle frame. According to the solutions of this application, reliability of the shaft bearing can be ensured, thereby ensuring reliability of the entire vehicle.

### BRIEF DESCRIPTION OF DRAWINGS

To describe the technical solutions in embodiments of this application or in the background, the following briefly describes the accompanying drawings for describing embodiments of this application or the background.
FIG. 1 is a schematic diagram of a structure of an electric vehicle according to an embodiment of this application;
FIG. 2 is a schematic block diagram of a structure of a powertrain of an electric vehicle according to an embodiment of this application;
FIG. 3 is a schematic diagram of a three-dimensional structure of a motor of a powertrain according to an embodiment of this application;
FIG. 4 is a schematic side view of a structure of the motor in FIG. 3;
FIG. 5 is a schematic sectional view of a structure of the motor in FIG. 4;
FIG. 6 is a schematic diagram of a partially enlarged structure of a position A in FIG. 5;
FIG. 7 is a schematic diagram of a three-dimensional assembly structure of a motor shaft and components cooperating with the motor shaft in FIG. 6;
FIG. 8 is a schematic diagram of a three-dimensional assembly structure of some components in FIG. 7;
FIG. 9 is a schematic exploded view of the assembly structure of FIG. 8;
FIG. 10 is a schematic diagram of a three-dimensional structure of a conductive post in FIG. 9;
FIG. 11 is a schematic sectional view of a structure of the conductive post in FIG. 10;
FIG. 12 is a schematic sectional view showing the assembly structure of FIG. 8;
FIG. 13 is a schematic diagram of a partially enlarged structure of a position B in FIG. 12;
FIG. 14 is a schematic diagram of a three-dimensional structure of a bracket in FIG. 9; and
FIG. 15 is a schematic diagram of a three-dimensional structure of a conductive connecting member in FIG. 9.

### DESCRIPTION OF EMBODIMENTS

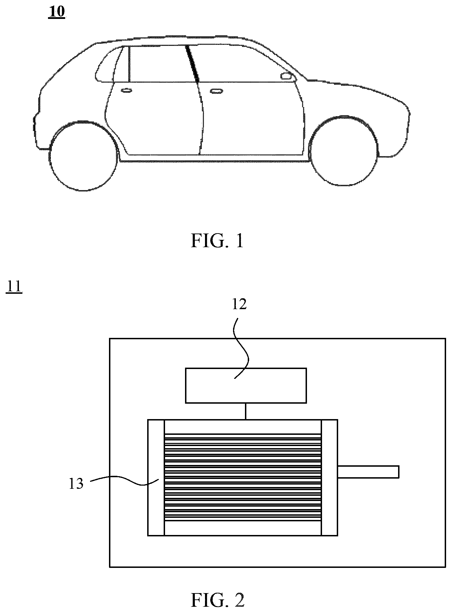

An embodiment of this application provides an electric vehicle, including but not limited to an electric car, an electric bus, an electric motorcycle, and the like. For example, FIG. 1 shows an electric SUV (Sport Utility Vehicle, sport utility vehicle) 10. The electric vehicle 10 may include a vehicle frame and a powertrain installed on the vehicle frame. The vehicle frame, serving as a structural framework of the electric vehicle 10, is configured to support, fix, and connect assemblies, and bear load from the inside of a vehicle system and from an external environment. The powertrain is a system including a series of components and configured to generate power and transmit the power to a road surface. As shown in FIG. 2, a powertrain 11 may include a motor controller 12 and a motor 13. The motor controller 12 is electrically connected to the motor 13 and is configured to control operation of the motor 13.

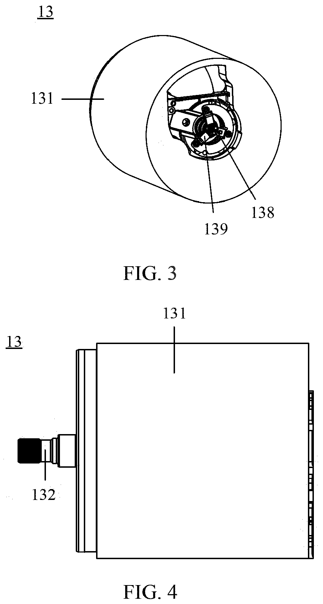

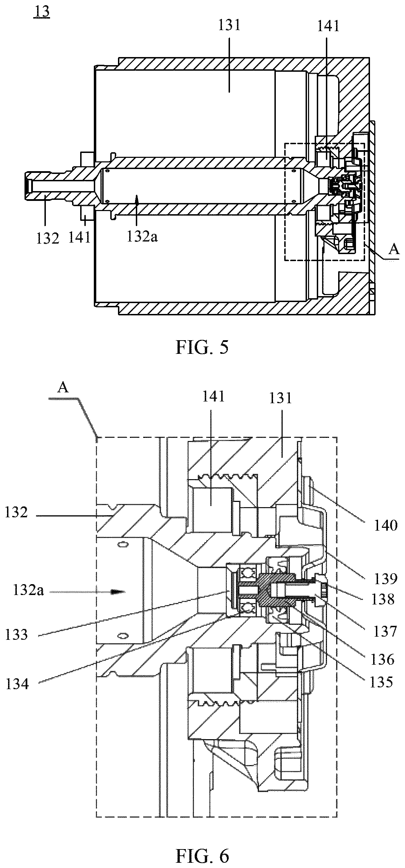

As shown in FIG. 3, FIG. 4, and FIG. 5 (FIG. 5 is a schematic sectional view of a structure of the motor 13 shown in FIG. 4, with a cross section parallel to the paper surface), the motor 13 of this embodiment may include a housing 131, a motor shaft 132, and a shaft bearing 141. The housing 131 may enclose an accommodating space. Both the motor shaft 132 and the shaft bearing 141 are installed on the housing 131. A part of the motor shaft 132 may be located inside the accommodation space, and a part of the motor shaft 132 may extend to the outside of the housing 131. The exposed part of the motor shaft 132 may serve as an output end, and an end opposite to the output end may be referred to as a positioning end. The positioning end may be located inside the receiving space. There may be two shaft bearings 141, which are installed, for example, on both sides of the housing 131. The motor shaft 132 rotates with respect to the housing 131 through the shaft bearing 141.

In this embodiment, specific structures of the housing 131, the motor shaft 132, and the shaft bearing 141, and positions of the motor shaft 132 and the shaft bearing 141 on the housing 131 may all be designed according to actual requirements, and are not limited in this embodiment.

As shown in FIG. 5, the motor shaft 132 has a cavity 132a, and the cavity 132a may extend in an axial direction of the motor shaft 132 and through the motor shaft 132. A cavity wall of the cavity 132a may be, for example, a cylindrical surface. Depending on product requirements, the cavity 132a may include segments, each of which may not have a same inner diameter. The motor 13 in this embodiment may be an oil-cooled motor, that is, cooling oil is used for cooling and heat dissipation. The cooling oil may flow in the housing 131 and in the cavity 132a to achieve cooling and heat dissipation.

FIG. 6 is a schematic diagram of a partially enlarged structure of a position A in FIG. 5. With reference to FIG. 5 and FIG. 6, the motor 13 may further include a first sealing member 133, a conductive post 136, a conductive bearing 134, a second sealing member 135, a bracket 139, and a conductive connecting member 138 that are installed in the housing 131. The first sealing member 133, the conductive bearing 134, and the second sealing member 135 are located entirely inside the cavity 132a of the motor shaft 132. A part of the conductive post 136 may be located inside the cavity 132a, and another part may extend to the outside of the cavity 132a. The bracket 139 is located substantially entirely outside the interior cavity 132a, and the conductive connecting member 138 may be located entirely outside the interior cavity 132a. The first sealing member 133, the conductive post 136, the conductive bearing 134, the second sealing member 135, the bracket 139, and the conductive connecting member 138 may all be close to the positioning end of the motor shaft 132.

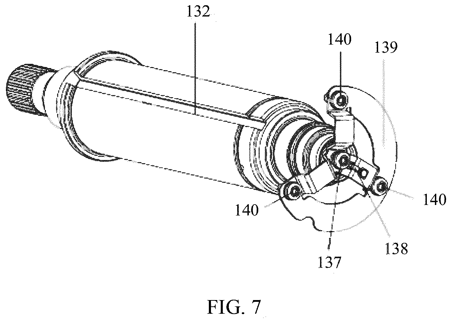

FIG. 7 may show an assembly structure of the motor shaft 132 and components located inside the housing 131, and components located inside the cavity 132a of the motor shaft 132 are not shown. As shown in FIG. 7, the bracket 139 may be located at the positioning end of the motor shaft 132, and the bracket 139 may be connected to the conductive post 136 through a first connecting member 137 (for example, a connecting member such as a screw or a bolt). With reference to FIG. 7 and FIG. 6, the bracket 139 may be further connected to the housing 131 (described below) through a second connecting member 140 (for example, a connecting member such as a screw or a bolt).

Installation positions of the first sealing member 133, the conductive post 136, the conductive bearing 134, the second sealing member 135, the bracket 139, and the conductive connecting member 138 are briefly described with examples. Installation positions of the components may be adjusted according to product requirements, and are not limited thereto. The following describes the components one by one.

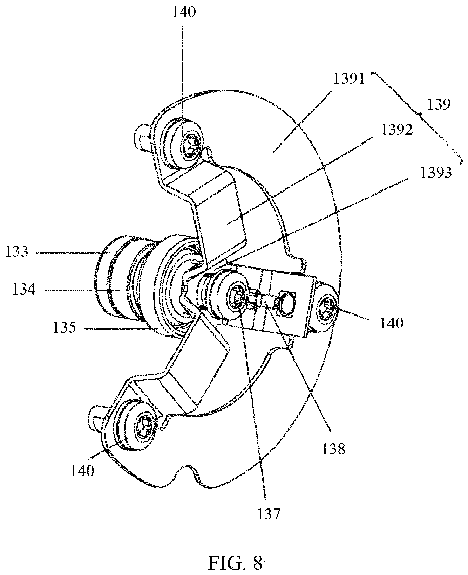

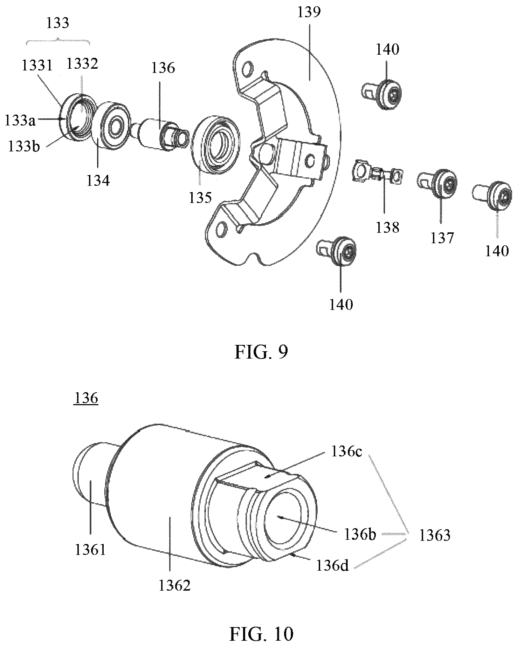

As shown in FIG. 8 and FIG. 9, the first sealing member 133 may be approximately in a shape of a cylindrical groove, and may include a base plate 1332 and a rim 1331. The rim 1331 surrounds an outer circumference surface of the base plate 1332, that is, the rim 1331 surrounds an outer circumference surface of the base plate 1332. The rim 1331 may be approximately annular, the rim 1331 has an outer circumferential surface 133a (peripheral circumferential surface), and the outer circumferential surface 133a may be approximately an annular surface. The rim 1331 and the base plate 1332 enclose an opening 133b. The first sealing member 133 may be, for example, an oil plug.

With reference to FIG. 9 and FIG. 6, the outer circumferential surface 133a of the rim 1331 may be fixedly connected to the cavity wall of the cavity 132a of the motor shaft 132. For example, an interference fit may be formed between the outer circumferential surface 133a and the cavity wall, so that the outer circumferential surface closely adheres to the cavity wall and connection between them is formed. In this way, the cooling oil in the cavity 132a will be blocked by the first sealing member 133. In addition, when the motor shaft 132 rotates, the first sealing member 133 rotates with rotation of the motor shaft 132.

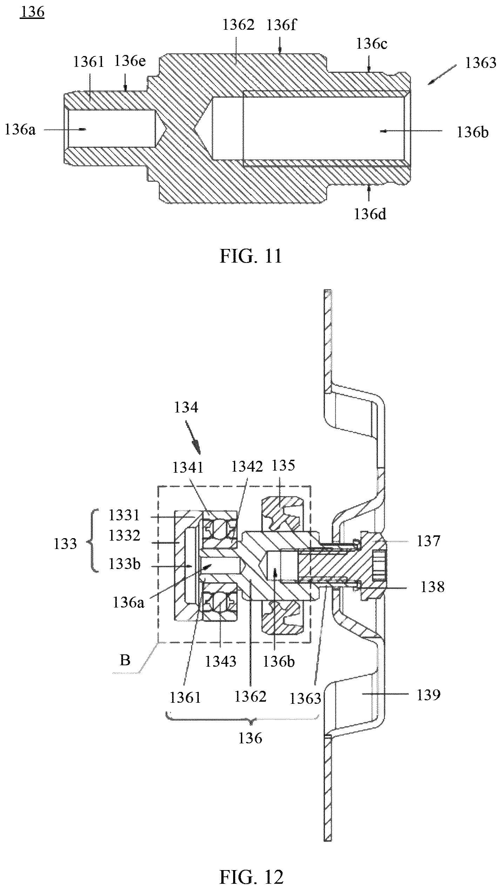

As shown in FIG. 10 and FIG. 11, the conductive post 136 may be approximately a stepped cylinder as a whole. The conductive post 136 may include a first portion 1361, a second portion 1362, and a third portion 1363 that are sequentially connected. Outer diameters of the first portion 1361 and the third portion 1363 may be relatively small, and an outer diameter of the second portion 1362 may be relatively large. The first portion 1361 may have a cavity 136a, the cavity 136a may extend in an axial direction of the first portion 1361, and the cavity 136a may pass through an end part of the first portion 1361. The cavity 136a may be, for example, a round hole. There may be a connection hole 136b inside the third portion 1363, and the connection hole 136b may be, for example, a threaded hole. The connection hole 136b may pass through an end part of the third portion 1363 and may extend to the second portion 1362. The connection hole 136b and the cavity 136a may not be connected, that is, the connection hole 136b and the cavity 136a may be separated by a material. An outer circumferential surface of the third portion 1363 may include a plane 136c and a plane 136d, which may be disposed opposite to each other, and the plane 136c and the plane 136d may be substantially parallel. The plane 136c and the plane 136d may be spaced apart by arcs. The structure of the conductive post 136 described above is merely an example. Actually, the structure of the conductive post 136 may be flexibly designed according to product requirements, and is not limited to the foregoing description.

As shown in FIG. 6, for example, a large part of the conductive post 136 may be located inside the cavity 132a of the motor shaft 132, and a small part of the conductive post 136 may be exposed to the outside of the cavity 132a. With reference to FIG. 6 and FIG. 11, for example, all of the first portion 1361 and the second portion 1362 of the conductive post 136 and a large part of the third portion 1363 may be located inside the cavity 132a, and an end part of the third portion 1363 may be exposed to the outside of the cavity 132a. Alternatively, the conductive post 136 may be all located inside the cavity 132a. The conductive post 136 is located on a side, facing away from the output end of the motor shaft 132, of the first sealing member 133. For example, from the perspective of FIG. 6, the conductive post 136 is located on the right side of the first sealing member 133.

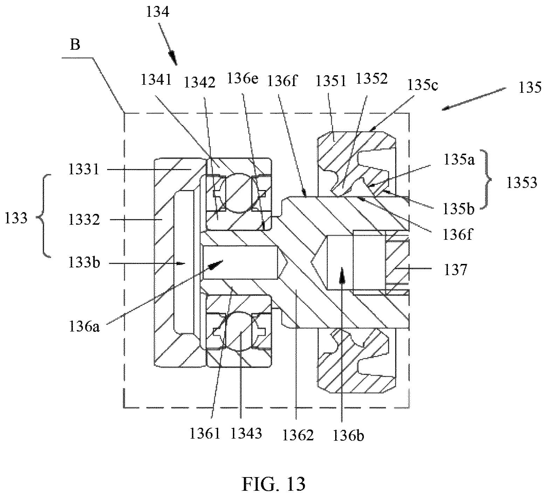

FIG. 12 may show an assembly structure of components in the vicinity of the conductive post 136. FIG. 13 is a schematic diagram of a partially enlarged structure of a position B in FIG. 12. With reference to FIG. 11 and FIG. 12, the first portion 1361 of the conductive post 136 may face the opening 133b of the first sealing member 133, and the third portion 1363 of the conductive post 136 may face away from the opening 133b. The first portion 1361 keeps spaced apart from both the rim 1331 and the base plate 1332 of the first sealing member 133. The conductive post 136 needs to keep stationary in the cavity 132a of the motor shaft 132, and the first portion 1361 keeps spaced apart from both the rim 1331 and the base plate 1332 to facilitate implementation of this design objective. The first portion 1361 fits the conductive bearing 134, the second portion 1362 fits the second sealing member 135, and the third portion 1363 fits the bracket 139, the conductive connecting member 138, and the first connecting member 137 (which is further described below).

As shown in FIG. 9 and FIG. 13, the second sealing member 135 may be approximately annular as a whole. The second sealing member 135 may be, for example, a skeleton oil seal, and may include a fitting portion 1351, a dust-proof lip 1352, and a sealing lip 1353. The dust-proof lip 1352 and the sealing lip 1353 are connected on a side of the fitting portion 1351. The fitting portion 1351 may serve as an outer ring structure of the second sealing member 135, and the dust-proof lip 1352 and the sealing lip 1353 may serve as an inner ring structure of the second sealing member 135. A notch may be formed between the dust-proof lip 1352 and the sealing lip 1353. The dust-proof lip 1352 is configured to block dust particles, and the sealing lip 1353 is configured to block cooling oil. The sealing lip 1353 includes intersecting surfaces 135a and 135b, an included angle of which may be, for example, an acute angle. The foregoing skeleton oil seal structure is merely an example, and this embodiment is not limited thereto. For example, a skeleton oil seal without a dust-proof lip may alternatively be used. Alternatively, another component having a sealing function may be used according to product requirements, and is not limited to a skeleton oil seal.

As shown in FIG. 13, the second sealing member 135 may be sleeved on an outer circumferential surface 136f of the second portion 1362 of the conductive post 136. A side at which the surface 135a and the surface 135b intersect (this side may form a very narrow contact surface) may be in contact with the outer circumferential surface 136f of the second portion 1362 at specific pressure. There may be a lubricating fluid between this side and the outer circumferential surface 136f of the second portion 1362. The fitting portion 1351 faces away from the outer circumferential surface 136f. The dust-proof lip 1352 may face the first sealing member 133, and the sealing lip 1353 may face away from the first sealing member 133.

With reference to FIG. 13 and FIG. 6, the fitting portion 1351 has an outer circumferential surface 135c facing away from the sealing lip 1353, and the outer circumferential surface 135c is fixedly connected to the cavity wall of the cavity 132a of the motor shaft 132, for example, to form an interference fit. In this way, the second sealing member 135 as a whole can rotate with rotation of the motor shaft 132, and the sealing lip 1353 slides on the outer circumferential surface 136f of the second portion 1362. When the sealing lip 1353 slides on the outer circumferential surface 136f, the sealing lip 1353 and the outer circumferential surface 136f of the second portion 1362 can be sealed under action of the lubricating fluid, so that cooling oil inside the housing 131 is blocked by the second sealing member 135. Therefore, the second sealing member 135, the first sealing member 133, and the cavity wall of the cavity 132a may enclose a sealed space, and cooling oil from the side of the second sealing member 135 and the side of the first sealing member 133 cannot enter the sealed space. This sealed space is used for installation of the conductive bearing 134 (described below).

As shown in FIG. 13, the conductive bearing 134 may include an outer ring 1341, an inner ring 1342, and a rolling element 1343, and the rolling element 1343 is installed between the outer ring 1341 and the inner ring 1342, to implement relative rotation between the outer ring 1341 and the inner ring 1342. Conductive grease is further sealed between the outer ring 1341 and the inner ring 1342, so that the conductive bearing 134 has a conductive property.

As shown in FIG. 13, the conductive bearing 134 may be located between the first sealing member 133 and the second sealing member 135. The inner ring 1342 of the conductive bearing 134 may be sleeved on an outer circumferential surface 136e of the first portion 1361 of the conductive post 136, and the inner ring 1342 may be fixedly connected to the outer circumferential surface 136e, for example, to form an interference fit. A distance between the conductive bearing 134 and the first sealing member 133 may be relatively small, and a distance between the conductive bearing 134 and the second sealing member 135 may be relatively large, which is merely an example. Actually, both the foregoing two distances may be determined according to actual requirements, and this is not limited in this embodiment.

With reference to FIG. 13 and FIG. 6, the outer ring 1341 of the conductive bearing 134 is fixedly connected to the cavity wall of the cavity 132a of the motor shaft 132, for example, to form an interference fit, so that the outer ring 1341 can rotate with rotation of the motor shaft 132.

Therefore, the conductive bearing 134 is installed in the sealed space described above. In such a design, the cooling oil from both the side of the first sealing member 133 and the side of the second sealing member 135 is blocked from entering the conductive bearing 134. This ensures that the conductive bearing 134 operates in an oil-free environment and prevents a failure of the conductive bearing 134 caused by scouring of the conductive bearing 134 by the cooling oil, thereby improving reliability of the conductive bearing 134.

In this embodiment, a shaft voltage on the motor shaft 132 can be transmitted to the housing 131 by using the conductive bearing 134, which is further described below.

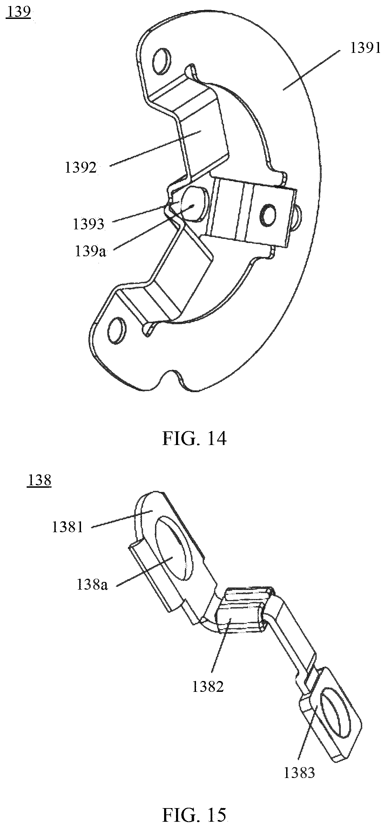

As shown in FIG. 9 and FIG. 14, the bracket 139 may include an outer circumferential portion 1391, a connecting portion 1392, and an inner circumferential portion 1393. The connecting portion 1392 connects the outer circumferential portion 1391 and the inner circumferential portion 1393. The outer circumferential portion 1391 may be approximately an arcuate annular plate structure, and a central angle of the outer circumferential portion 1391 may be, for example, greater than 180 degrees. The connecting portion 1392 may be approximately a bent plate-like structure, and may be formed by bending and connecting several segments (for example, three segments). There may be, for example, at least two (for example, three) connecting portions 1392, and these connecting portions 1392 may be distributed in a radially divergent form, that is, each connecting portion 1392 may extend in a radial direction of the outer circumferential portion 1391, and radius positions of different connecting portions 1392 may be different. Included angles of adjacent connecting portions 1392 may be approximately equal or not equal to each other. The inner circumferential portion 1393 may be approximately a flat plate shape, and may be provided with a fitting hole 139a. A shape of the fitting hole 139a may be adapted to a shape of the outer circumferential surface of the third portion 1363 of the conductive post 136. For example, an inner surface of the fitting hole 139a may include two planes and two arcs. The planes are spaced apart by and connected to the arcs. In such a structure, the bracket 139 has a reliable structure, can occupy small space, can be used to support another component, and has good reusability.

The structure of the bracket 139 described above is merely an example. Another variant structure may be further provided according to product requirements, and this is not limited in this embodiment.

With reference to FIG. 11, FIG. 12, and FIG. 14, the bracket 139 may fit the third portion 1363 of the conductive post 136. Specifically, the third portion 1363 may pass through the fitting hole 139a in the inner circumferential portion 1393 of the bracket 139, and the plane 136c on the third portion 1363 fits one plane on the inner surface of the fitting hole 139a. For example, the plane 136c may maintain a relatively small specified gap between the plane 136c and the plane. The plane 136d on the third portion 1363 fits another plane on the inner surface of the fitting hole 139a. For example, the plane 136c may maintain a relatively small specified gap between the plane 136d and the another plane. A curved surface on the third portion 1363 fits a curved surface on the inner surface of the fitting hole 139a, for example, to maintain a relatively small specified gap. In such a fitting design of fitting between the bracket 139 and the third portion 1363 of the conductive post 136, the bracket 139 can clasp the third portion 1363, so that the third portion 1363 does not produce significant relative movement in a circumferential direction of the cavity 132a.

With reference to FIG. 14 and FIG. 6, the outer circumferential portion 1391 of the bracket 139 may be fixedly connected to the housing 131. With reference to FIG. 9, the outer circumferential portion 1391 may be fixed to the housing 131, for example, by using several (for example, three) second connecting members 140. In this way, the bracket 139 can suspend, support, and limit the conductive post 136, thereby ensuring reliable positioning of the conductive post 136 in the cavity 132a of the motor shaft 132. In other embodiments, a corresponding structural design may be employed to ensure reliable positioning of the conductive post 136 in the cavity 132a of the motor shaft 132, without using the bracket 139.

As shown in FIG. 15, the conductive connecting member 138 may be approximately a bent plate-like (or sheet-like) structure, and may include a first contact portion 1381, a middle portion 1382, and a second contact portion 1383, which may be sequentially connected in a bent manner, and a bend angle may be approximately 90 degrees. The first contact portion 1381 is provided with a through-hole 138a. Such a conductive connecting member 138 has a reliable structure and reliable conduction, and assembly precision can be easily ensured. The structure of the conductive connecting member 138 described above is merely an example. Another variant may be provided according to product requirements, and this is not limited in this embodiment. For example, the conductive connecting member 138 may also be replaced with a cable (such as a stranded copper wire).

With reference to FIG. 15, FIG. 12, and FIG. 11, the first contact portion 1381 of the conductive connecting member 138 may be in contact with the end part of the third portion 1363 of the conductive post 136. The through-hole 138a in the first contact portion 1381 may be aligned with the connection hole 136b in the third portion 1363. The first connecting member 137 passes through the through-hole 138a and is connected to the connection hole 136b, to fix the first contact portion 1381 to the end part of the third portion 1363.

With reference to FIG. 15 and FIG. 8, the second contact portion 1383 of the conductive connecting member 138 may be fixedly connected to the inner circumferential portion 1393 of the bracket 139. For example, the second contact portion 1383 and the inner circumferential portion 1393 may be connected through a connecting member such as a rivet or a screw, or through welding, bonding, or the like.

The conductive connecting member 138 may be made of a conductive material. The conductive connecting member 138 is capable of electrically connecting the conductive post 136 and the bracket 139. Because the bracket 139 is connected to the housing 131, the conductive post 136 and the housing 131 can be electrically connected by the conductive connecting member 138 and the bracket 139. In other embodiments, when the bracket 139 is not disposed, the conductive connecting member 138 may also be electrically connected to the housing 131, to electrically connect the conductive post 136 and the housing 131 as well.

Refer to FIG. 5 and FIG. 6, when a shaft voltage is generated on the motor shaft 132, a shaft current may be conducted along the following path: motor shaft 132 -> conductive bearing 134 -> conductive post 136 -> conductive connecting member 138 -> bracket 139 -> housing 131. The housing 131 is grounded (for example, earthed), so that the shaft current can be transmitted to the ground. Therefore, the shaft voltage on the motor shaft 132 is released to the ground, preventing the shaft bearing 141 from electrical corrosion.

According to the solutions of the embodiments, the foregoing shaft current conduction path is designed, to prevent the shaft bearing 141 from bearing electrical erosion, and ensure reliability of the shaft bearing 141. In addition, the conductive bearing 134 can be sealed by using the first sealing member 133 and the second sealing member 135, to ensure that the conductive bearing 134 operates in an oil-free environment and that the conductive bearing 134 can be conductive reliably.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A motor, comprising:
a housing, a shaft bearing, a motor shaft, a first sealing member, a conductive post, a conductive bearing, a second sealing member, and a conductive connecting member, wherein
the shaft bearing is fixed to the housing; the motor shaft is rotatably installed on the housing through the shaft bearing; a part of the motor shaft is located inside the housing, and the motor shaft has a cavity; and the first sealing member, the conductive bearing, the second sealing member, the conductive post, and the conductive connecting member are all located inside the housing;
the first sealing member is located inside the cavity, and an outer circumferential surface of the first sealing member is fixedly connected to a cavity wall of the cavity;
at least a part of the conductive post is located inside the cavity, and the conductive post is located on a side of the first sealing member;
the second sealing member is located inside the cavity, the second sealing member is sleeved on an outer circumference surface of the conductive post, an inner side of the second sealing member is in slidable contact with the outer circumferential surface of the conductive post, and an outer circumferential surface of the second sealing member is fixedly connected to the cavity wall of the cavity; and the second sealing member, the first sealing member, and the cavity wall of the cavity enclose a sealed space;
the conductive bearing is located inside the sealed space, an outer ring of the conductive bearing is fixedly connected to the cavity wall of the cavity, and an inner ring of the conductive bearing is fixedly connected to the outer circumferential surface of the conductive post; and
the conductive connecting member is connected to one end, facing away from the first sealing member, of the conductive post and is electrically connected to the housing.

2. The motor according to claim 1, wherein
the first sealing member comprises a base plate and a rim, the rim surrounds an outer circumference surface of the base plate, and an outer circumferential surface of the rim is fixedly connected to the cavity wall of the cavity; and the rim and the base plate enclose an opening, the opening faces the conductive post, and both the base plate and the rim are spaced from the conductive post.

3. The motor according to claim 1 or 2, wherein
the second sealing member comprises a fitting portion and a sealing lip, the sealing lip is connected to the fitting portion, the fitting portion faces the cavity wall of the cavity, and the sealing lip faces the outer circumferential surface of the conductive post; the fitting portion is annular, and a surface, facing away from the sealing lip, of the fitting portion is the outer circumferential surface of the second sealing member; and the sealing lip comprises two intersecting surfaces, and a side at which the two surfaces intersect is an inner side of the second sealing member.

4. The motor according to any one of claims 1 to 3, wherein
the motor comprises a bracket located inside the housing, and the bracket is fixedly connected to the housing; the bracket is connected to one end, facing away from the first sealing member, of the conductive post; and the conductive connecting member connects the conductive post and the bracket, to electrically connect to the housing through the bracket.

5. The motor according to claim 4, wherein
the bracket comprises an outer circumferential portion, a connecting portion, and an inner circumferential portion, and the connecting portion connects the outer circumferential portion and the inner circumferential portion; the outer circumferential portion is fixedly connected to the housing; the inner periphery portion has a fitting hole; and one end, facing away from the first sealing member, of the conductive post passes through the fitting hole.

6. The motor according to claim 5, wherein
the outer circumferential portion is in a shape of an arc plate; and there are at least two connecting potions, and the at least two connecting portions are distributed in a radial divergence manner.

7. The motor according to claim 5 or 6, wherein
an outer circumferential surface of one end, facing away from the first sealing member, of the conductive post comprises two planes, and the two planes are disposed opposite to each other; and the fitting hole is adapted to the outer circumferential surface of the end, facing away from the first sealing member, of the conductive post.

8. The motor according to any one of claims 4 to 7, wherein
the conductive connecting member comprises a first contact portion, a middle portion, and a second contact portion, the middle portion connects the first contact portion and the second contact portion, the first contact portion is connected to the middle portion in a bent manner, and the middle portion is connected to the second contact portion in a bent manner; and the first contact portion is connected to an end part of the end, facing away from the first sealing member, of the conductive post, and the second contact portion is connected to the bracket.

9. The motor according to any one of claims 1 to 8, wherein
the end, facing the first sealing member, of the conductive post is a hollow cylindrical structure.

10. The motor according to any one of claims 1 to 9, wherein
the end, facing away from the first sealing member, of the conductive post has a connection hole; and the motor comprises a connecting member, and the connecting member fits the connection hole and fixes the conductive connecting member to the conductive post.

11. A powertrain, comprising:
a motor controller and the motor according to any one of claims 1 to 10, wherein the motor controller is electrically connected to the motor.

12. An electric vehicle, comprising:
a vehicle frame and the powertrain according to claim 11, wherein the powertrain is installed on the vehicle frame.
